# EUROPEAN PATENT SPECIFICATION

(11) **EP 2 234 887 B1**
(45) Date of publication and mention of the grant of the patent: **03.07.2013**
(21) Application number: 08861367.4
(22) Date of filing: 18.12.2008
(51) Int. Cl.: B64F 1/305

(54) **SHOCK ABSORBING DEVICE FOR BOARDING BRIDGE**
STOSSDÄMPFUNGSVORRICHTUNG FÜR EINSTIEGBRÜCKE
DISPOSITIF D'AMORTISSEMENT DES CHOCS POUR UNE PASSERELLE D'EMBARQUEMENT

(30) Priority: 18.12.2007 KR 20070133014
(43) Date of publication of application: 06.10.2010
(73) Proprietor: Otis Elevator Company, Farmington, CT 06032-2568 (US)
(72) Inventor: KIM, Ju Ryong, Seoul 134-797 (KR)
(74) Representative: Klunker . Schmitt-Nilson . Hirsch
(86) International application number: PCT/US2008/087329
(87) International publication number: WO 2009/079616

(56) References cited:
- EP-A- 1 327 726
- EP-A- 1 719 702
- GB-A- 1 228 257
- US-A- 3 537 745
- US-A- 3 650 558
- US-A- 5 359 746
- US-A- 5 855 035
- US-B1- 6 704 963

## Description

### Technical Field

The present invention concerns a shock-absorbing device for a boarding bridge, wherein said shock-absorbing device for a boarding bridge is configured to enable stable tunnel movement while stabilizing the weight of the boarding bridge, due to it being installed below lift columns that support the boarding bridge installed to enable convenient movement of passengers between airport buildings and passenger aircraft.

### Description of the Related Art

In general, boarding bridges are installed at airports between airport buildings and passenger aircraft to provide a path for safe and convenient movement of passengers from the airport buildings to the aircraft while they are unaffected by various weather conditions or the external environment; said bridges have a structure that enables movement and compression of length based on the distance between the building and the aircraft and the location of the aircraft door.

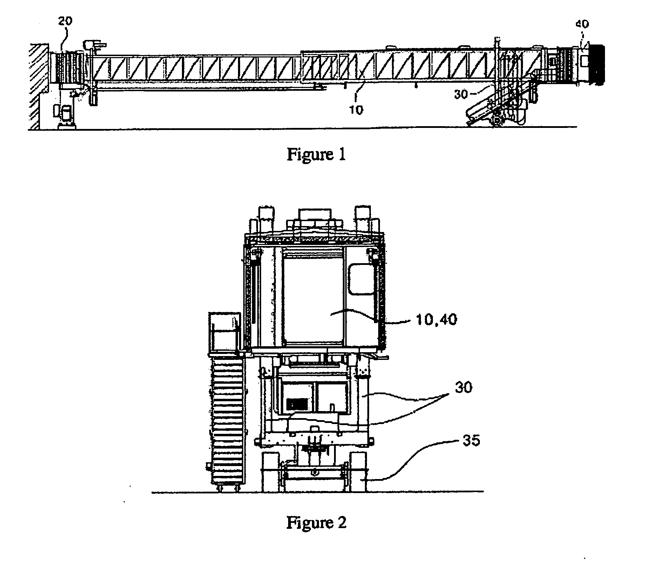

Figures 1 and 2 depict a typical boarding bridge of the prior art comprising a tunnel (10) with multiple segments that can be folded upon each other to enable adjustment of length, and the interior whereof forms a path that enables human movement; a rotunda (20) that functions as a rotational axis to enable rotation of said tunnel (10) based on the aircraft location; lift columns (30) that enable vertical movement of said tunnel (10) based on the size of the aircraft and the location of the door; a cabin (40) formed to enable a change in direction from opposite said rotunda (20) to the direction of the aircraft door.

In boarding tunnels of the prior art, there is a structure wherein said tunnel (10) has two mutually-collapsible sections; a pair of wheels (35) is installed on the bottom of said lift columns (30) and provides power to move said tunnel (10); a pair of elastic members is installed separately between said wheels (35) and the lift columns (30) to prevent unstable titling or shaking of said tunnel (10) when the displacement of said wheels (35) is directly communicated to said tunnel (10).

The respective components of the boarding bridge have a high value-added, technologically-integrated structure because they are fabricated in a sufficiently large size to be able to extend to 40 m or more with a height of 5 m or more; therefore, it is of prime importance that they operate in a stable way when being used, transported, and stored because if they are damaged, not only is a great loss of time and money incurred, but passenger safety is also directly impacted.

However, in the above-described structure, said pair of wheels (35) bears the entire weight that is transmitted through said lift columns (30); as the distance between said wheels (35) increases, said wheels (35) are able to stably support said tunnel (10) located at a substantial height; however, as the distance between said wheels (35) is expanded, even distribution of the weight between the two wheels (35) is difficult if said tunnel (10) is even slightly tilted.

In addition, it is problematic in that if said tunnel (10) is tilted or shaken even slightly during operation, vertical shaking of the tunnel (10) is repeated through rebound of said elastic members, so quick stabilization at a fixed position is impossible.

US 3 537 745 A shows vehicle for transferring passengers to and from aircraft. The vehicle includes a passenger or freight pod, a chassis connected to a front axle unit and a rear axle unit. The chassis includes a front lifting post and a rear lifting post, both of hollow sleeve construction, each secured along the longitudinal axis of the chassis. The pod is mounted for vertical movement, up and down, to match the height of the door still of the floor of an airport terminal dock, the front wheel axle unit includes wheels secured respectively to axle units by means of conventional kingpin joints. In order to absorb road vibration and shock as the vehicle travels along the air-field, spring suspension means are interposed between the chassis frame and the axle units.

EP 1 719 702 A1 discloses an auxiliary supporting unit for a boarding bridge, a boarding bridge with the same and method for improving stability of boarding bridge. The auxiliary supporting unit includes a leg support which can be driven to extend and retract; and a foot portion attached to one end of the leg support, wherein the foot portion can be supported on the ground when the leg support being extended and can leave the ground when the leg support being retracted.

### SUMMARY

An exemplary shock-absorbing device for a boarding bridge effectively absorbs and quickly stabilizes shocks caused by shaking or tilting of the tunnel and stably distributes the weight transmitted through the lift columns.

Another feature of the present invention pertains to a shock-absorbing device for a boarding bridge, and to a shock-absorbing device for a boarding bridge installed at the bottom of lift columns supporting the boarding-bridge tunnel that is technically comprised of a first transverse support coupled to the bottom of said lift columns, having an extended length in the transverse direction; a second transverse support installed separately below said first transverse support; elastic material coupled between the First and Second transverse supports to elastically support said First transverse support; dampers coupled between said first and second transverse supports to absorb residual vibration from said elastic material; left and right driveshafts coupled to fixed positions to the left and right, respectively, of said Second transverse support, to be able to rotate; a drive mechanism that generates motive force to move said tunnel and is equipped with one pair of right-side wheels to the left and right of said right driveshaft and connected to said right driveshaft.

In this case, the aforementioned elastic members may be coupled respectively to the front and back of the left and right sides of the aforementioned first and second transverse supports, and that the aforementioned dampers comprise a left damper installed between one pair of elastic members coupled to the left side of said first and second transverse supports, and a right damper installed between one pair of elastic members coupled to the right side of the first and second transverse supports.

In addition, the aforementioned is installed adjacent to said elastic members.

In addition, said dampers may comprise a left damper installed between one pair of elastic members coupled to the left side of the aforementioned first and second transverse supports, and a right damper installed between one pair of elastic members coupled to the right side of the first and second transverse supports.

The damper may comprise a cylinder installed vertically and loaded with gas or oil; a piston that moves along the axis of said cylinder, partially inserted into said cylinder; a shock-absorber configured as an orifice installed in the insertion end of said piston; a protruding head formed to protrude from the exterior end of the piston of said shock-absorber; an elastic spring installed between said shock-absorber cylinder and the protruding head to elastically apply pressure to said protruding head.

A vibration-damping axle can be configured with a fixed coupling at the top to the middle part of the aforementioned first transverse support and coupled by a hinge at the bottom to the middle part of the aforementioned second transverse support so that shaking of the second transverse support is independent of the first transverse support.

An additional feature of the present invention is a shock-absorbing device for a boarding bridge, installed at the bottom of lift columns supporting the boarding bridge tunnel and furnished with a drive mechanism that generates power to move said tunnel, wherein said drive mechanism comprises a left driveshaft coupled to the left side of the transverse support installed at the base of said lift columns and extending lengthwise; a right driveshaft coupled to the right side of said transverse support to enable rotation to a fixed position; a pair of left-side wheels that are installed connected to said left driveshaft on the right and left sides of said left driveshaft; a pair of right-side wheels that are connected to said right driveshaft on the right and left sides of said right driveshaft.

In this case, the device may comprise a sensor that senses the real-time displacement and direction of the aforementioned right and left wheels; a controller that outputs a control signal to adjust the rotation of said left and right driveshafts independently of one another based on comparing the real-time displacement and direction of said left and right wheels sensed by the aforementioned sensor with a specified displacement and direction.

The left wheel axle that connects the aforementioned left wheels to the left driveshaft can be hinge-coupled to the bottom of the aforementioned left driveshaft, and that the right wheel axle that connects the aforementioned right wheels to the right driveshaft be hinge-coupled to the aforementioned right driveshaft.

Also the device additionally may comprise a sensor that senses the real-time displacement and direction of the aforementioned right and left wheels; a controller that outputs a control signal to adjust the rotation of said left and right driveshafts independently of one another based on comparing the real-time displacement and direction of said left and right wheels sensed by the aforementioned sensor with a specified displacement and direction.

The present invention with the above-described configuration has the effect that the dampers can provide quick stabilization and efficient absorption of shocks caused by shaking or residual vibration due to rebound of the elastic members, while the elastic members nonetheless provide stable support to vertical weight transmitted to lift columns and the first transverse support, due to the installation of the elastic members and dampers between the first and second transverse supports and the coupling of the first and second transverse supports to the bottom of the lift columns and the top of the drive mechanism, respectively.

Not only does this enable a reduction in the enormous loss of time and money incurred in repair and management since the occurrence or aggravation of damage that is due to not quickly reducing unstable tunnel vibrations can be prevented, but it has the additional effect of being able to increase the reliability of aircraft and airport facilities by guaranteeing passenger safety.

In addition, due to the even distribution of the support for weight transmitted from the lift columns among four wheels, not only is a more stable structure made possible having a greatly reduced pressure on each wheel, but this has the additional effect of enabling further improvements in product lifespan through reduction of the load placed on the drive motor that drives the wheels.

Furthermore, this has the additional effect of enabling the preservation of a stable weight-support condition even if the tunnel is tilted, by evenly transmitting weight that is transmitted downward while imbalanced to one side among the 4 wheels that are close to one another, through the second transverse axis, due to the elastic members and the vibration-damping axle.

An additional effect is that because the distance between wheels is reduced, the rotation radius required for the wheels to move when rotated is reduced below that of the prior art, so the same rotate angle can be achieved with less displacement, enabling freer movement from one location to another with the application of drive power by independent, minor adjustment in the rotation of the left and right pairs of wheels.

An additional effect is that, even if the boarding bridge is configured with a length of 40 m or more and a height of 8 m or more, stable support of the boarding bridge weight can be maintained, so installation and safe use at airports served by super-jumbo aircraft such as the A380 are possible.

The various features and advantages of this invention will become apparent to those skilled in the art from the following detailed description. The drawings that accompany the detailed description can be briefly described as follows.

### BRIEF DESCRIPTION OF THE DRAWINGS

Figure 1: Side view depicting an ordinary boarding bridge.

Figure 2: Front view depicting an ordinary boarding bridge.

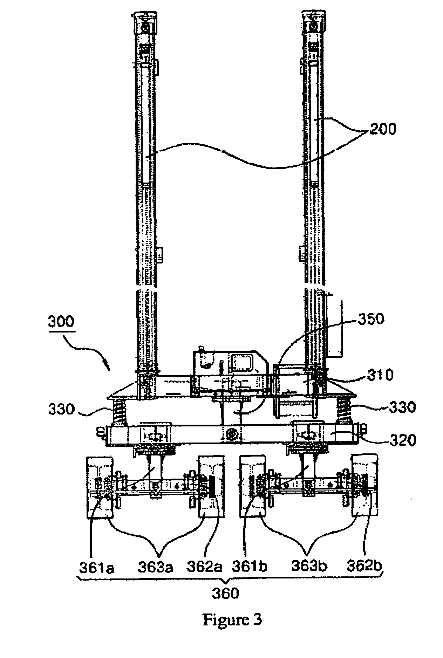

Figure 3: Front view depicting Embodiment 1 of the shock-absorbing device of this invention.

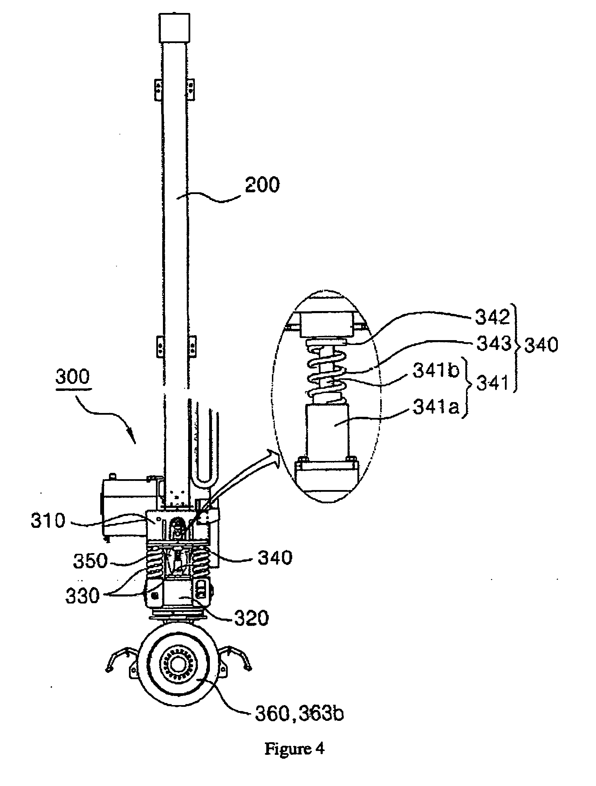

Figure 4: Side view depicting Embodiment 1 of the shock-absorbing device of this invention.

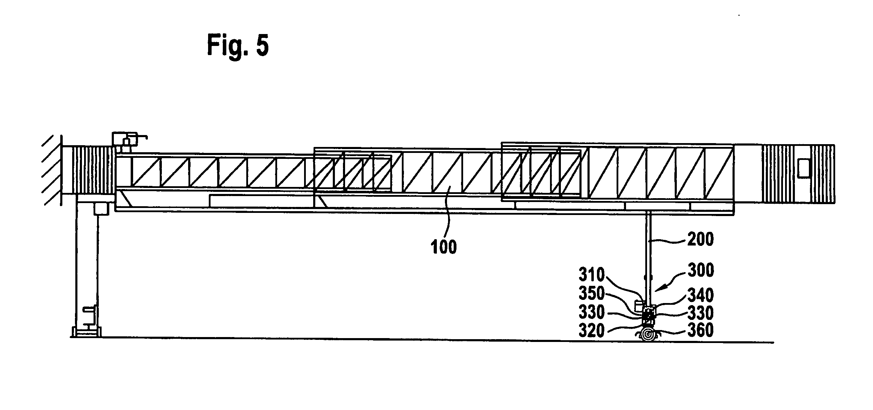

Figure 5: Side view depicting a boarding bridge for which the shock-absorbing device of this invention has been installed.

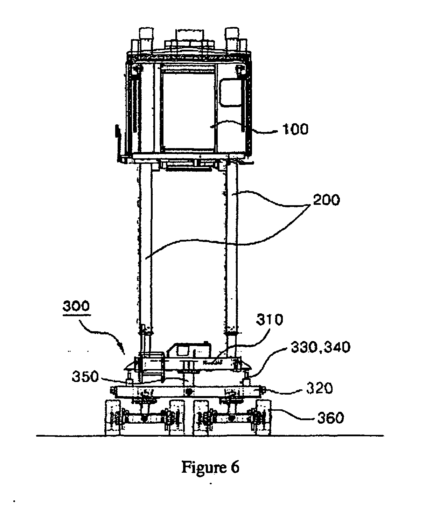

Figure 6: Front view depicting a boarding bridge for which the shock-absorbing device of this invention has been installed.

### DETAILED DESCRIPTION

The shock absorbing device of the present invention is installed at the bottom of lift columns (200) that support the boarding bridge tunnel (100), to enable stable movement of the tunnel (100) while providing stable support of the boarding bridge weight; Embodiment 1 of the shock absorbing device of the present invention broadly comprises the aforementioned first transverse support (310), Second transverse support (320), elastic members (330), dampers (340), and drive mechanism (360); it has a structure wherein said first transverse support (310) is coupled to the bottom of said lift columns (200), while said Second transverse support (320) is coupled to the top of said drive mechanism (360), and said elastic members (330) and dampers (340) are installed between said first transverse support (310) and second transverse support (320).

Said first transverse support (310) is coupled to the bottom of said lift columns (200) and has a lengthwise extension such that a pair of said lift columns (200) can be firmly fixed in a fixed position to the left or right to enable the even distribution and transmission of weight transmitted through the pair of said lift columns (200) on the left and right to multiple said elastic members (330).

Said second transverse support (210) is coupled to the top of said drive mechanism (360) below said first transverse support (310), and has a lengthwise extension such that multiple said elastic members (330) can be fixed firmly in a fixed position to enable even distribution and transmission of the weight transmitted via said multiple elastic members (330) to the drive mechanism (360) that is furnished with multiple wheel members.

Said elastic members (330) have a degree of elasticity that enables the elastic support of said first transverse support (310) that has received weight from the aforementioned lift columns (200), and are coupled between said first transverse support (310) and second transverse support (320); they have a fixed, coupled structure wherein they are fastened above and below to projecting parts of said first transverse support (310) and second transverse support (320) to enable compression while maintaining a firm link above and below in the fixed position of said first transverse support (310) and second transverse support (320).

Said elastic members (330) support weight transmitted from below [sic] and supported by said lift columns (200), while also flexibly transmitting expansion/contraction and transmitting pressure or displacement transmitted form said first transverse support (310) to said second transverse support (320) to prevent unstable tilting or shaking if said drive mechanism (360) is unable to maintain its specified position, while at the same time preventing unstable tilting or shaking of the tunnel (100) by transmitting pressure and displacement transmitted from below to said second transverse support (320) to said first transverse support (310).

In Embodiment 1 of the present invention, said elastic members (330) are coupled respectively to the front and back of the left and right sides of said first transverse support (310) and second transverse support (320), so that they are installed in 4 locations corresponding to the points adjacent to the 4 corners of said first transverse support (310) and second transverse support (320).

Said elastic elements (330), based on their simple property of shrinking when pressure is applied and rebounding when pressure is removed, compress when they receive a shock while in use, and expand when the shock disappears, and continue their bouncing action of compression and expansion; however, the aforementioned dampers (340) are coupled between said first transverse support (310) and second transverse support (320) to absorb residual vibration of said elastic elements (330), so that the bouncing characteristic of said elastic members (300) is controlled.

Said dampers (340) is configured such that when said elastic members (330) compress, a force is transmitted to said first transverse support (310) and second transverse support (320) in the direction of expansion of said elastic members (330), and when said elastic members (330) expand, a force is transmitted to said first transverse support (310) and second transverse support (320) in the direction of compression of said elastic members (330), and thereby the residual vibration of said elastic members (330) is absorbed so that the structure above said elastic members (330) always remains stable.

Said dampers (340) are installed together with said elastic members (330), and both protect the structure above the first transverse support (310) and the structure below the second transverse support (320) from abrupt shocks and prevent unstable leaning to one side or abrupt tilting and overturning of said first transverse support (310) and Second transverse support (320); with regard to this action, it is preferable that they be installed in locations adjacent to said elastic members (330) to more efficiently enable expansion and contraction matched to the condition of said elastic members (330).

In said Embodiment 1, said elastic members (330) have a structure wherein they are installed at 4 locations adjacent to the 4 corners of said first transverse support (310) and second transverse support (320); thus, it is preferable that said dampers (340) be installed as a left and right damper located between the pair of elastic members (330) coupled to the left side of said first transverse support (310) and second transverse support (320) and the pair of elastic members (330) coupled to the right side.

The structure and form of said dampers (340) are not limited as long as the shock absorption effect described above can be provided; in Embodiment 1 of the present invention, a said damper (340) broadly comprises a shock absorber (341), protruding head (342), and elastic spring (343), with said protruding head (342) formed at one end of said shock absorber (341), which has a cylinder-piston structure; said elastic spring (343) has a coupled structure to elastically join the two ends at the far sides of said shock absorber (341) and said protruding head (342).

Said shock absorber (341) broadly comprises a cylinder (341a), piston (341b), and an orifice (not shown); said cylinder (341a) is installed vertically and is loaded with gas or oil; said piston (341b) is inserted into one end of said cylinder (341a) to move and undergo displacement in along the axial direction of said cylinder (341a); said orifice is installed in the end into which said piston (341b) is inserted to have a focusing effect of expanding or reducing the size of the pipe formed by said cylinder (341a).

Said protruding head (342) is formed protruding in the axial direction from the outer end of said piston (341b) inserted at one end into the cylinder (341a) of said shock absorber; said elastic spring (343) is installed between the cylinder (341a) and protruding head (342) of said shock absorber to provide upward rebound to said piston (341b) by elastically pressurizing said protruding head (342).

Said Embodiment 1 has a structure wherein in addition to said elastic members (330) and dampers (340), a vibration-damping axle (350) is also furnished between said first transverse support (310) and second transverse support (320); said vibration-damping axle (350) is coupled pillar-fashion to the top and bottom of said first transverse support (310) and second transverse support (320), to support from below said first transverse support (310) together with said elastic elements (330) located between said first transverse support (310) and second transverse support (320).

Said vibration-damping axle (350) has a structure wherein the coupling of said first transverse support (310) is a fixed coupling in the middle of said first transverse support (310), but the coupling to said second transverse support (320) is a hinge coupling in the middle of said second transverse support (320).

Based on this, the left-right vibrational state of said first transverse support (310) is transmitted intact to said second transverse support (320) by said vibration-damping axle (350), while the up-down vibrational state of said second transverse support is not transmitted directly to said first transverse support (310), so that each is independent of the other, whereby the efficient moderation and absorption of shocks as described above by said elastic members (330) and dampers (340) is made possible.

Said drive mechanism (360) broadly comprises a left driveshaft (361a), right driveshaft (361b), left wheels (363a) and right wheels (363b); it has a structure wherein the pair of said left wheels (363a) is coupled to the bottom of said left driveshaft (361a), and the pair of said right wheels (363b) is coupled to the bottom of said right driveshaft (361b), which is installed to the right of said left driveshaft (361a).

Said left driveshaft (361a) and right driveshaft (361b) are coupled to the left and right side of said second transverse support (320), respectively, to enable rotation in a fixed position and to stably receive and distribute pressure transmitted downward by said second transverse support (320) to two locations to the left and right.

Said left wheels (363a) are furnished to the left driveshaft (361a) in one pair connecting from the left and right of said left driveshaft (361a), supporting and distributing the pressure transmitted from said left driveshaft (361a) to two locations to the left and right; said right wheels (363b) are furnished to the right driveshaft (361b) in one pair connecting from the left and right of said right driveshaft (361b), supporting and distributing the pressure transmitted from said right driveshaft (361b) to two locations to the left and right.

Said left wheels (363a) and right wheels (363b) are furnished as one pair each, to be installed and used at the bottom of the shock-absorbing device of the present invention with their bases in contact with the ground; thus, the weight transmitted from the aforementioned lift columns (200) to the shock-absorbing device of the present invention is ultimately distributed and supported among a total of 4 locations spaced apart to the left and right.

The coupling of the wheel axle connecting said left driveshaft (361a) and left wheels (363a) (hereinafter referred to as the left axle (362a)) to said left driveshaft (361a) is a hinge coupling on the bottom of said left driveshaft (361a); the coupling of the wheel axle connecting said right driveshaft (361b) and right wheels (363b) (hereinafter referred to as the right axle (362b)) to said right driveshaft (361b) is a hinge coupling on the bottom of said right driveshaft (361b).

Based on the above-described coupling structure of said left and right axles (362a, 362b), the up-down vibrational state of said left and right axles (362a, 362b) is not transmitted directly to said left and right driveshafts (361a, 361b), while the left-right vibrational state of said left and right driveshafts (361a, 361b) is not transmitted to said left and right axles (362a, 362b); thus, said left and right wheels (363a, 363b) and second transverse support (320) are not shaken or tilted by unstable pressure transmitted from above or below, and their condition remains stable.

If a sensor (not shown) that senses the real-time displacement and direction of said left and right wheels (363a, 363b) is furnished together with a controller (not shown) that outputs a control signal that causes the mutually-independent rotation adjustment of said left driveshaft (361a) and right driveshaft (361b) or said left and right wheels (363a, 363b), said sensor and controller can be used to automatically control the driving of said left and right wheels (363a, 363b) by comparing the preferable direction of said left and right wheels (363a, 3636) at their current location with the displacement and direction of said left and right wheels (363a, 363b) as sensed in real time by said sensor (not shown).

In addition to the technical outline comprising said first transverse support (310), second transverse support (320), elastic members (330), dampers (340), and drive mechanism (360), as in Embodiment 1 above, the structure comprising said first transverse support (310), second transverse support (320), elastic members (330) and dampers (340) is an additional technical outline (hereinafter "Embodiment 2"), and the structure furnished with the drive mechanism (360) comprising said left driveshaft (361a), right driveshaft (361b), left wheels (363a) and right wheels (363b) is an additional technical outline (hereinafter "Embodiment 3"), which is not part of the claimed invention.

Embodiment 1 of the shock-absorbing device of the present invention has a structure that integrates said Embodiments 2 and 3 to enable an integrated shock-absorbing and weight-supporting action through both the shock-absorbing and weight-supporting functionality of Embodiment 2. and the shock-absorbing and weight-supporting functionality of Embodiment 3; since the structure and principles of operation thereof have already been clearly explained in the description of Embodiment 1 above, a repetitious detailed description of the configurations of said Embodiments 2 and 3 will be omitted.

In the present invention configured as described above, said first and second transverse supports (310, 320) are coupled to the bottom of said lift columns (200) and the top of said drive mechanism (360), and said elastic members (330) and dampers (340) are installed between said first and second transverse supports (310, 320), whereby said elastic members (330) provide stable support for weight transmitted vertically to said lift columns (200) and first transverse support (310), while residual vibration due to rebound of said elastic members (330), and shocks due to shaking or tilting of said tunnel (100), are quickly absorbed by said dampers (340).

In addition, even if said tunnel (100) tilts or vibrates, the weight transmitted downward, if the tunnel leans to one side, from said first transverse support (310) to said elastic members (330) and vibration-damping axle (350), is transmitted in a balanced fashion to the 4 wheel members, spaced at a distance from one another, through said second transverse support (320), so that a more stable weight-distribution condition can be maintained.

In addition, due to the even distribution of support for weight transmitted from said lift columns (200) among 4 wheel members, not only is a more stable structure having much-reduced pressure on each wheel member made possible, compared to existing structures, but further improvements in product lifespan are made possible through reduction of the load placed on the drive motor that drives the wheel members.

Not only does this enable a reduction in the great loss of time and money incurred in repair and management under the prior art, since the occurrence or aggravation of damage which are due to not quickly reducing unstable shaking of said tunnel (100) can be prevented, but the reliability of aircraft and airport facilities can be increased by guaranteeing the safety of passengers using said tunnel (100).

In addition, inasmuch as the spacing between the wheel members is compressed relative to the 2-wheel-member structures of the prior art, when rotating it is possible to rotate over the same angle with less displacement because the minimum rotation radius of the wheel members is also reduced; thus, freer movement is made possible by slight adjustments in the rotational drive to the respective wheel members or axles.

The preceding description is exemplary rather than limiting in nature. Variations and modifications to the disclosed examples may become apparent to those skilled in the art. The scope of legal protection given to this invention can only be determined by studying the following claims.

## Claims

1. A shock-absorbing device (300) for a boarding bridge for use with lift columns (200) supporting a boarding-bridge tunnel (10) and furnished with a drive mechanism that moves said tunnel (10), said shock-absorbing device (300) comprising:
a first transverse support (310) configured to be coupled to a bottom of said lift columns (200), having an extended length in a direction transverse to the extension of the bridge;
a second transverse support (320) installed separately below said first transverse support (310);
elastic members (330) coupled separately between the first and second transverse supports (310, 320) to elastically support said first transverse support (310); and
dampers (340) coupled between said first and second transverse supports (310, 320) to absorb residual vibration from said elastic members (330);
**characterized in that** said dampers (340) are installed adjacent to the elastic members (330).

2. The shock-absorbing device (300) for a boarding bridge recited in claim 1, wherein said elastic members (330) are coupled separately to front and rear parts on opposite sides of the first and second transverse supports (310, 320).

3. The shock-absorbing device (300) for a boarding bridge recited in any of the preceding claims, wherein said dampers (340) comprise a first damper (340) installed between two of the elastic members (330) coupled to one side of the first and second transverse supports (310, 320), and a second damper (340) installed between two others of the elastic members (330) coupled to another side of the first and second transverse supports (310, 320).

4. The shock-absorbing device (300) for a boarding bridge recited in any of the preceding claims, furnished with a drive mechanism (360) that generates power to move said tunnel (10), wherein said drive mechanism (360) comprises
a first driveshaft (361a) coupled to a first side of a transverse support (320) installed at the base of said lift columns (200) and extending lengthwise;
a second driveshaft (361b) coupled to a second side of said transverse support (320) to enable rotation in a fixed position;
a pair of first-side wheels (363a) that are installed connected to said first driveshaft (361a) on opposite sides of said first driveshaft (361 a); and
a pair of second-side wheels (363b) that are connected to said second driveshaft (361 b) on opposite sides of said second driveshaft (361 b).

5. The shock-absorbing device (300) for a boarding bridge recited in any of the claims 1 to 3, further comprising
first and second driveshafts (361a, 361 b) coupled to fixed positions to opposite sides, respectively of said second transverse support (320), to be able to rotate; and
a drive mechanism (360) that generates a motive force to move said tunnel (10) and equipped with a plurality of wheels (363a, 363b) on opposite sides of said second driveshaft (361b), which are connected to said second driveshaft (361 b).

6. The shock-absorbing device (300) for a boarding bridge recited in any of the preceding claims, wherein the dampers (340) each comprise
a cylinder (341a) installed vertically and loaded with gas or oil;
a piston (341 b) that moves along an axis of said cylinder (341a), partially inserted into said cylinder (341a);
a shock-absorber configured as an orifice installed in an insertion end of said piston (341b);
a protruding head (342) formed to protrude from an exterior end of the piston (341b) of said shock-absorber; and
an elastic spring (343) installed between said shock-absorber cylinder (341a) and the protruding head (342) to elastically apply pressure to said protruding head (342).

7. The shock-absorbing device (300) for a boarding bridge recited in claim 4, comprising
a sensor that senses real-time displacement and direction of the first and second wheels;
a controller that outputs a control signal to adjust the rotation of said first and second driveshafts (361a, 361b), or of said first-side and second-side wheels (363a, 363b), independently of one another based on comparing the real-time displacement and direction of said first and second wheels (363a, 363b) sensed by the sensor with a specified displacement and direction.

8. The shock-absorbing device (300) for a boarding bridge recited in any of the claim 5 to 7, comprising
an axle that connects wheels to the first driveshaft (361a) the axle is coupled by a hinge to a bottom of said first driveshaft (361 a), and
an axle that connects the plurality of wheels (363a, 363b) to the second driveshaft (361b), the axle is coupled by a hinge to the bottom of said second driveshaft 361b).

9. The shock-absorbing device (300) for a boarding bridge recited in any of the preceding claims, comprising a vibration-damping axle (350) with a fixed coupling near a middle part of the first transverse support (310) and coupled by a hinge near a middle part of the second transverse support (320) so that shaking of the second transverse support (320) is independent of the first transverse support (310).

## Patentansprüche

1. Stoßdämpfungsvorrichtung (300) für eine Fluggastbrücke zur Benutzung mit Hubsäulen (200), die einen Fluggastbrückentunnel (10) abstützen und mit einem Antriebsmechanismus ausgestattet sind, der den Tunnel (10) bewegt, wobei die Stoßdämpfungsvorrichtung (300) aufweist:
eine erste Transversalabstützung (310), die eingerichtet ist, mit einem unteren Bereich der Hubsäulen (200) verbunden zu werden, und die eine Erstreckungslänge in einer Richtung quer zur Erstreckung der Brücke hat;
eine zweite Transversalabstützung (320), die separat unterhalb der ersten Transversalabstützung (310) installiert ist;
elastische Elemente (330), die separat zwischen der ersten und der zweiten Transversalabstützung (310, 320) angebracht sind, um die erste Transversalabstützung (310) elastisch abzustützen; und
Dämpfer (340), die zwischen der ersten und der zweiten Transversalabstützung (310, 320) angebracht sind, um Restschwingungen von den elastischen Elementen (330) zu absorbieren;
**dadurch gekennzeichnet, dass** die Dämpfer (340) neben den elastischen Elementen (330) installiert sind.

2. Stoßdämpfungsvorrichtung (300) für eine Fluggastbrücke nach Anspruch 1, wobei die elastischen Elemente (330) separat mit einem vorderen und einem hinteren Bereich auf gegenüberliegenden Seiten der ersten und der zweiten Transversalabstützung (310, 320) verbunden sind.

3. Stoßdämpfungsvorrichtung (300) für eine Fluggastbrücke nach einem der vorangehenden Ansprüche, wobei die Dämpfer (340) aufweisen:
einen ersten Dämpfer (340), der zwischen zwei der elastischen Elemente (330) installiert ist, die mit einer Seite der ersten und der zweiten Transversalabstützung (310, 320) verbunden sind, und
einen zweiten Dämpfer (340), der zwischen zwei anderen der elastischen Elemente (330) installiert ist, die mit einer anderen Seite der ersten und der zweiten Transversalabstützung (310, 320) verbunden sind.

4. Stoßdämpfungsvorrichtung (300) für eine Fluggastbrücke nach einem der vorangehenden Ansprüche, die mit einem Antriebsmechanismus (360) ausgestattet ist, der eine Kraft erzeugt, um den Tunnel (10) zu bewegen, wobei der Antriebsmechanismus (360) aufweist:
eine erste Antriebswelle (361a), die mit einer ersten Seite einer Transversalabstützung (320) verbunden ist, die an der Basis der Hubsäulen (200) installiert ist und sich in Längsrichtung erstreckt;
eine zweite Antriebswelle (361b), die mit einer zweiten Seite der Transversalabstützung (320) verbunden ist, um in einer festen Position eine Rotation zu ermöglichen;
ein Paar Räder (363a) auf einer ersten Seite, die so installiert sind, dass sie auf gegenüberliegenden Seiten der ersten Antriebswelle (361a) mit der ersten Antriebswelle (361a) verbunden sind; und
ein Paar Räder (363b) auf einer zweiten Seite, die auf gegenüberliegenden Seiten der zweiten Antriebswelle (361b) mit der zweiten Antriebswelle (361b) verbunden sind.

5. Stoßdämpfungsvorrichtung (300) für eine Fluggastbrücke nach einem der Ansprüche 1 bis 3, zusätzlich aufweisend:
eine erste und eine zweite Antriebswelle (361a, 361b), die jeweils mit festen Positionen auf einander gegenüberliegenden Seiten der zweiten Transversalabstützung (320) verbunden sind, um in der Lage zu sein, zu rotieren; und
ein Antriebsmechanismus (360), der eine Bewegungskraft erzeugt, um den Tunnel (10) zu bewegen, und der mit mehreren Rädern (363a, 363b) auf gegenüberliegenden Seiten der zweiten Antriebswelle (361b) ausgestattet ist, die mit der zweiten Antriebswelle (361b) verbunden sind.

6. Stoßdämpfungsvorrichtung (300) für eine Fluggastbrücke nach einem der vorangehenden Ansprüche, wobei die Dämpfer (340) jeweils aufweisen:
einen Zylinder (341a), der vertikal installiert und mit Gas oder Öl gefüllt ist;
einen Kolben (341b), der sich entlang einer Achse des Zylinders (341a) bewegt und teilweise in den Zylinder (341a) eingeführt ist;
einen Stoßdämpfer, der als Blende ausgebildet ist, die in einem Einfügeende des Kolbens (341b) installiert ist;
einen hervorstehenden Kopf (342), der so ausgebildet ist, dass er von einem äußeren Ende des Kolbens (341b) des Stoßdämpfers hervorsteht; und
einer elastischen Feder (343), die zwischen dem Stoßdämpfer-Zylinder (341a) und dem hervorstehenden Kopf (342) installiert ist, um elastisch Druck auf den hervorstehenden Kopf (342) auszuüben.

7. Stoßdämpfungsvorrichtung (300) für eine Fluggastbrücke nach Anspruch 4, aufweisend:
einen Sensor, der in Echtzeit Verlagerungsdistanz und Richtung der ersten und zweiten Räder erkennt;
eine Steuerung, die ein Steuersignal ausgibt, um basierend auf Vergleichen der Echtzeit-Verlagerungsdistanz und -Richtung der ersten und zweiten Räder (363a, 363b), die durch den Sensor wahrgenommen worden sind, mit einer vorgegebenen Verlagerung und Richtung die Rotation der ersten und zweiten Antriebswelle (361a, 361b) oder der Räder (363a, 363b) auf der ersten und der zweiten Seite unabhängig voneinander anzupassen.

8. Stoßdämpfungsvorrichtung (300) für eine Fluggastbrücke nach einem der Ansprüche 5 bis 7 aufweisend:
eine Achse, die Räder mit der ersten Antriebswelle (361) verbindet, wobei die Achse durch ein Scharnier mit einem unteren Bereich der ersten Antriebswelle (361a) verbunden ist, und
eine Achse, welche die mehreren Räder (363a, 363b) mit der zweiten Antriebswelle (361b) verbindet, wobei die Achse durch ein Gelenk mit einem unteren Bereich der zweiten Antriebswelle (361b) verbunden ist.

9. Stoßdämpfungsvorrichtung (300) für eine Fluggastbrücke nach einem der vorangehenden Ansprüche, die in der Nähe eines mittleren Bereiches der ersten Transversalabstützung (310) eine Vibrationsdämpfungsachse (350) mit einer festen Verbindung aufweist und die durch ein Gelenk in der Nähe eines mittleren Bereiches der zweiten Transversalabstützung (320) verbunden ist, so dass ein Schütteln der zweiten Transversalabstützung (320) unabhängig von der ersten Transversalabstützung (310) ist.

## Revendications

1. Dispositif d'amortissement des chocs (300) pour une passerelle d'embarquement à utiliser avec des colonnes de levage (200) supportant un tunnel de passerelle d'embarquement (10) et pourvu d'un mécanisme d'entraînement qui déplace ledit tunnel (10), ledit dispositif d'amortissement des chocs (300) comprenant :
un premier support transversal (310) configuré pour être couplé à un fond desdites colonnes de levage (200) ayant une longueur étendue dans une direction transversale à l'extension de la passerelle ;
un deuxième support transversal (320) installé séparément au-dessous dudit premier support transversal (310) ;
des organes élastiques (330) couplés séparément entre les premier et deuxième supports transversaux (310, 320) pour supporter élastiquement ledit premier support transversal (310) ; et
des amortisseurs (340) couplés entre lesdits premier et deuxième supports transversaux (310, 320) pour absorber une vibration résiduelle desdits organes élastiques (330) ;
**caractérisé en ce que** lesdits amortisseurs (340) sont installés adjacents aux organes élastiques (330).

2. Dispositif d'amortissement des chocs (300) pour une passerelle d'embarquement selon la revendication 1, dans lequel lesdits organes élastiques (330) sont couplés séparément à des parties avant et arrière sur des côtés opposés des premier et deuxième supports transversaux (310, 320).

3. Dispositif d'amortissement des chocs (300) pour une passerelle d'embarquement selon l'une quelconque des revendications précédentes, dans lequel lesdits amortisseurs (340) comprennent un premier amortisseur (340) installé entre deux des organes élastiques (330) couplés à un côté des premier et deuxième supports transversaux (310, 320), et un deuxième amortisseur (340) installé entre deux autres des organes élastiques (330) couplés à un autre côté des premier et deuxième supports transversaux (310, 320).

4. Dispositif d'amortissement des chocs (300) pour une passerelle d'embarquement selon l'une quelconque des revendications précédentes, pourvu d'un mécanisme d'entraînement (360) qui génère une puissance pour déplacer ledit tunnel (10), dans lequel ledit mécanisme d'entraînement (360) comprend :
un premier arbre d'entraînement (361a) couplé à un premier côté d'un support transversal (320) installé à la base desdites colonnes de levage (200) et s'étendant longitudinalement ;
un deuxième arbre d'entraînement (361b) couplé à un deuxième côté dudit support transversal (320) pour permettre une rotation à une position fixe ;
une paire de roues de premier côté (363a) qui sont installées reliées au dit arbre d'entraînement (361a) sur des côtés opposés dudit premier arbre d'entraînement (361a) ; et
une paire de roues de deuxième côté (363b) qui sont reliées au dit deuxième arbre d'entraînement (361b) sur des côtés opposés dudit deuxième arbre d'entraînement (361 b).

5. Dispositif d'amortissement des chocs (300) pour une passerelle d'embarquement selon l'une quelconque des revendications 1 à 3, comprenant en outre :
des premier et deuxième arbres d'entraînement (361a, 361b) couplés à des positions fixes sur des côtés opposés respectivement dudit deuxième support transversal (320) pour pouvoir tourner ; et
un mécanisme d'entraînement (360) qui génère une force motrice pour déplacer ledit tunnel (10) et équipé d'une pluralité de roues (363a, 363b) sur des côtés opposés dudit deuxième arbre d'entraînement (361b), qui sont reliées au dit deuxième arbre d'entraînement (361b).

6. Dispositif d'amortissement des chocs (300) pour une passerelle d'embarquement selon l'une quelconque des revendications précédentes, dans lequel les amortisseurs (340) comprennent chacun :
un cylindre (341a) installé verticalement et chargé de gaz ou d'huile ;
un piston (341b) qui se déplace le long d'un axe dudit cylindre (341a), partiellement inséré dans ledit cylindre (341 a) ;
un amortisseur de chocs configuré sous la forme d'un orifice installé dans une extrémité d'insertion dudit piston (341b) ;
une tête faisant saillie (342) formée pour faire saillie d'une extrémité extérieure du piston (341 b) dudit amortisseur de chocs ; et
un ressort élastique (343) installé entre ledit cylindre d'amortisseur de chocs (341a) et la tête faisant saillie (342) pour appliquer élastiquement une pression à ladite tête faisant saillie (342).

7. Dispositif d'amortissement des chocs (300) pour une passerelle d'embarquement selon la revendication 4, comprenant :
un capteur qui détecte un déplacement et une direction en temps réel des premières et deuxièmes roues ;
un organe de commande qui délivre un signal de commande pour ajuster la rotation desdits premier et deuxième arbres d'entraînement (361a, 361b), ou desdites roues de premier côté et de deuxième côté (363a, 363b), indépendamment l'un de l'autre, sur la base de la comparaison du déplacement et de la direction en temps réel desdites premières et deuxièmes roues (363a, 363b) détectés par le capteur à un déplacement spécifié et une direction spécifiée.

8. Dispositif d'amortissement des chocs (300) pour une passerelle d'embarquement selon l'une quelconque des revendications 5 à 7, comprenant :
un essieu qui relie les roues au premier arbre d'entraînement (361a), l'essieu étant couplé par une charnière à un fond dudit premier arbre d'entraînement (361a), et
un essieu qui relie la pluralité de roues (363a, 363b) au deuxième arbre d'entraînement (361b), l'essieu étant couplé par une charnière au fond dudit deuxième arbre d'entraînement (361b).

9. Dispositif d'amortissement des chocs (300) pour une passerelle d'embarquement selon l'une quelconque des revendications précédentes, comprenant un essieu d'amortissement de vibrations (350) avec un accouplement fixe à proximité d'une partie centrale du premier support transversal (3 10) et couplé par une charnière à proximité d'une partie centrale du deuxième support transversal (320) de sorte qu'une secousse du deuxième support transversal (320) soit indépendante du premier support transversal (310).
